Europäisches Patentamt

European Patent Office

Office européen des brevets

(19)

(11) Publication number : **0 632 304 A1**

(12) **EUROPEAN PATENT APPLICATION**

(21) Application number : **94304830.6**

(22) Date of filing : **01.07.94**

(51) Int. Cl.⁶ : **G02B 27/00, G02B 5/18**

(30) Priority : **02.07.93 US 85357**

(43) Date of publication of application :
**04.01.95 Bulletin 95/01**

(84) Designated Contracting States :
**DE FR GB**

(71) Applicant : **XEROX CORPORATION**
**Xerox Square**
**Rochester New York 14644 (US)**

(72) Inventor : **Harris, Ellis D:**
**1646 Lynoak Drive**
**Claremont, California 91711 (US)**

(74) Representative : **Goode, Ian Roy et al**
**Rank Xerox Ltd**
**Patent Department**
**Parkway**
**Marlow Buckinghamshire SL7 1YL (GB)**

(54) **Phase shift binary optical element.**

(57) Two sections (16,18) of a binary optical element are perpendicularly or vertically offset relative to each other to induce a shift in phase from light beams (18,26) transmitted through the sections. An offset ($d_{offset}$) of $\lambda/2(n-1)$ will cause a $\Pi$ shift in the phase between beams transmitted through the two sections of the binary optical element. An offset of $\lambda/4(n-1)$ will cause a $\Pi/2$ shift in the phase between beams transmitted through the two sections of the binary optical element. The phase shift plate may be used for beam shaping.

FIG. 1

This invention relates to a binary optical element, and, more particularly, to a binary optical element which will provide a phase shift between adjacent wavefronts of an incident light beam.

Traditionally, phase shifting means have involved polarized light. A polarized beam of light passes perpendicularly through a parallel plate of crystal, the phase shifting means. The beam of light is divided into two cross-polarized component parts. The ordinary component or ray passes through the plate undeviated. The other component, the extraordinary ray, will emerge from the plate parallel to, but spatially displaced from, the emerging ordinary ray. At the appropriate thickness of the plate, there will be a difference in phase between the two rays.

If the phase difference produced by the plate thickness for the two polarizations is $\Pi/2$, the plate is called a quarter-wave plate. A plate which introduces a phase difference of $\Pi$ is called a half-wave plate.

This prior art method of phase shifting light beams has several limitations. The incident light beam must be polarized. The incident light beam is divided into two component rays which are phase shifted from each other. The prior means does not introduce a difference in phase between two adjacent wavefronts of the incident light beam.

It is an object of this invention to provide phase shift means for non-polarized light.

It is another object of this invention to provide an optical element for phase shifting adjacent wavefronts of an incident light beam.

In accordance with the present invention, at least two sections of a binary optical element are perpendicularly or vertically offset relative to each other to induce a shift in phase from light beams transmitted through the sections. An offset of $\lambda / 2 (n-1)$ will cause a $\Pi$ shift in the phase between beams transmitted through the two sections of the binary optical element. An offset of $\lambda / 4 (n-1)$ will cause a $\Pi / 2$ shift in the phase between beams transmitted through the two sections of the binary optical element.

Other objects and attainments together with a fuller understanding of the invention will become apparent and appreciated by referring to the following description and claims taken in conjunction with the accompanying drawings, in which:

Figure 1 is a schematic illustration of the cross-section side view of the phase shift binary optical element formed according to the present invention.

Figure 2 is a schematic illustration of the cross-section side view of the fabrication of the phase shift binary optical element of Figure 1 formed according to the present invention.

Figure 3 is a schematic illustration of the top view of a binary diffractive optical element for multiple phase apodization formed according to the present invention.

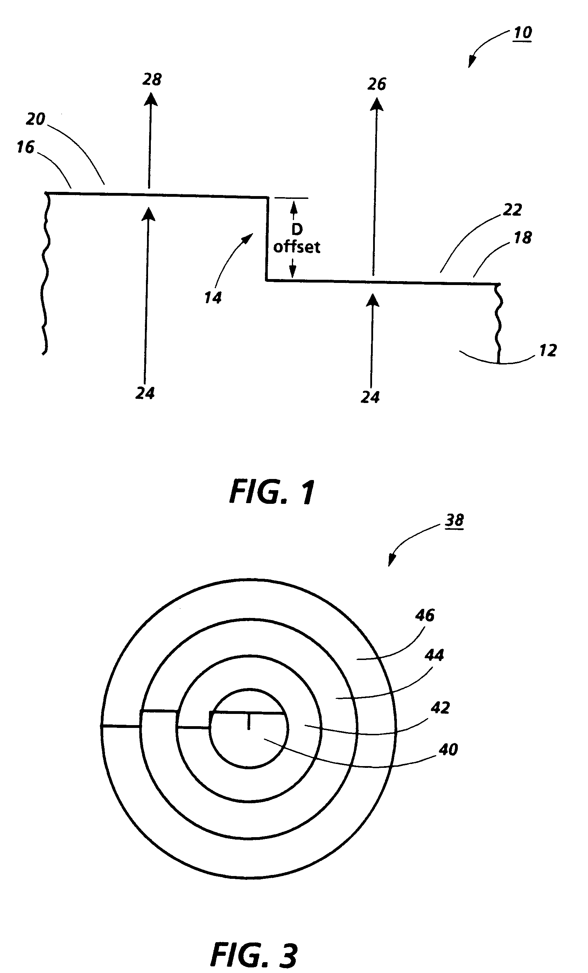

Reference is now made to Figure 1, wherein there is illustrated a phase shift binary optical element 10 consisting of an optical substrate 12 with a two-level or binary surface relief pattern 14. The first section or reference section 16 of the optical substrate 12 is offset perpendicularly by a distance, $d_{offset}$, from the surface of the optical substrate from the adjacent or second section 18 of the optical substrate 12. This perpendicular or vertical offset, in structural terms of the binary optical element 10, means the optical substrate 12 is thicker (by the distance or depth, $d_{offset}$) beneath the first section 16 than beneath the second section 18. The surface 20 of section 16 is separated by the distance, $d_{offset}$, in the perpendicular direction from the surface 22 of section 18.

An incident collimated light beam 24 passes through the optical substrate 12. A wavefront of light 26 which passes through thinner section 18 of the substrate will then pass through the surface 22 into the adjacent medium, which is air for the purposes of this illustrative example. An adjacent wavefront 28 of light which passes through the section 16 of the substrate will have to pass through an additional thickness, $d_{offset}$, of the substrate before then passing through the surface 20 into the adjacent medium.

The optical substrate 12 has an index of refraction of n, which is larger than the index of refraction of air of 1. Light moving through the optical substrate or a section of the optical substrate will be slower than light traveling through air.

If the wavefront of light exiting surface 22 of the thinner section 18 is a half wavelength ahead of the adjacent wavefront of light exiting surface 20 of the thicker section 16, then for a time, $t_1$,

$$t_1 = d_{offset} n / c = (d_{offset} + \lambda/2) / c \quad \text{Equation 1}$$

where $\lambda$ is the wavelength of the light beam in air and n is the index of refraction of the optical substrate.

The time for the adjacent wavefront of light to move through the thickness, d, of the section 16 of the optical substrate is equal to the time for the wavefront of light to move through air a distance of $d_{offset}$ plus a half wavelength.

Thus,

$$(n - 1)d_{offset} = \lambda/2 \quad \text{Equation 2}$$

where $\lambda$ is the wavelength of the light beam in air and n is the index of refraction of the optical substrate.

And solving for $d_{offset}$, the perpendicular distance that the second section is offset from the first or reference section, the distance of the extra thickness of the optical substrate to introduce a half wavelength or $\Pi$ difference in phase between adjacent wavefronts of an incident beam passing through the optical substrate,

$$d_{offset} = \lambda/2 (n - 1) \quad \text{Equation 3}$$

where $\lambda$ is the wavelength of the light beam in air and n is the index of refraction of the optical substrate.

For a quarter wavelength or $\Pi/2$ difference in phase between adjacent wavefronts of an incident beam passing through the optical substrate, the second section of the binary optical element must be spatially offset perpendicularly a depth, $d_{offset}$, from the first or reference section of the binary optical element where

$$d_{offset} = \lambda/4 \, (n - 1) \quad \text{Equation 4}$$

where $\lambda$ is the wavelength of the light beam in air and $n$ is the index of refraction of the optical substrate.

The general rule for a $m \, \Pi$ difference in phase shift between adjacent wavefronts of an incident beam passing through the optical substrate, where $m$ is any whole number or fraction of a whole number, is that the necessary perpendicular spatial offset, $d_{offset}$, between the second section and the reference section of the binary optical element is

$$d_{offset} = m(\lambda/ 2(n - 1)) \quad \text{Equation 5}$$

where $n$ is the index of refraction of the optical substrate and $\lambda$ is the wavelength of the incident light beam in air.

Since optical amplitude must pass through the zero level as phase reverses, the phase shift binary optical element 10 placed in a Gaussian laser beam would produce a complex amplitude having both negative and positive lobes and could be used to approximate a $\sin (x) / x$ function when the beam size relative to the phase shift structure is appropriate. Other simple phase functions can also be approximated.

The phase shift binary optical element 10 does not require a polarized beam nor does it divide a single beam but rather adjacent wavefronts of the same beam are shifted in phase relative to each other. No ray bending or lens effect is used in the phase shift binary optical element 10.

The two level or binary surface relief structure of the binary optical element is fabricated by VLSI etching or deposition techniques, as described herein below. The essential equipment necessary for producing the multiple levels or grooves of the surface relief structure include, for example, an electron or laser beam pattern generator for generating a series of masks to be placed successively on the optical substrate 12, a spin coater to spread photoresist on the substrate 12, a mask aligner and ultraviolet exposure system for aligning a mask with high accuracy and for exposing the photoresist, and a reactive ion etcher to etch the substrate 12 to the predefined depth or thickness, $d$.

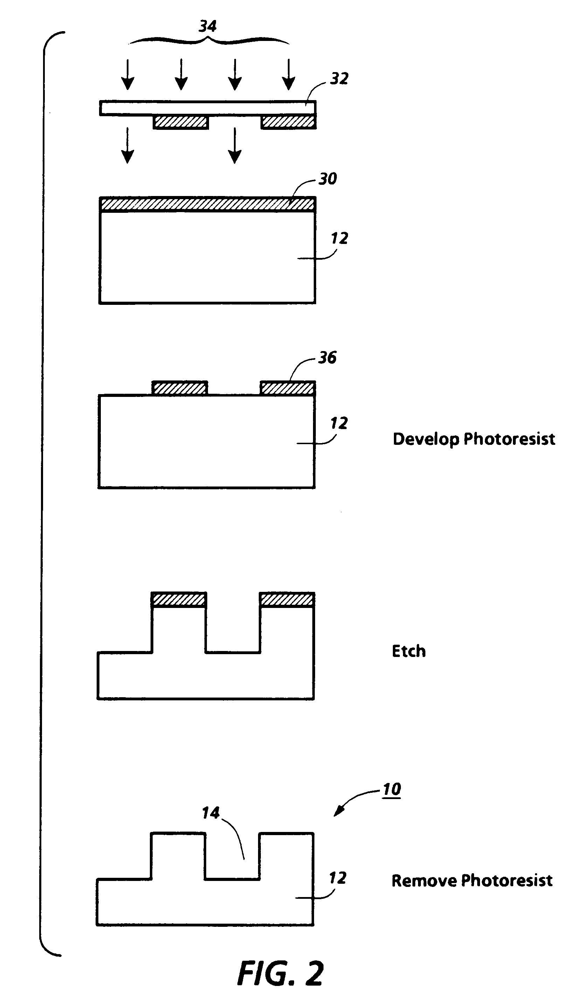

The fabrication process uses the first mask as shown in Figure 2. The optical substrate 12 on which the binary surface relief structure is to be fabricated is spin coated with a layer of photoresist 30.

Equation 3 or 4 will provide the appropriate depth, $d$, for the level of the etch.

The pattern generated mask 32 is then placed in intimate contact with the photoresist coated surface of the substrate 12 and illuminated with ultraviolet light from a standard ultraviolet photoresist exposure system 34. The photoresist layer 30 is then developed resulting in a patterned layer 36 of photoresist on the optical substrate 12. The photoresist acts as an etch stop for the reactive ion etching.

Reactive ion etching (RIE) is a process in which an RF electric field excites a gas to produce ions. The ions react with the material of the substrate and etch away the surface at a controlled rate. The reactive ion etching process is anisotropic so that the vertical side walls of the discrete surface profile are retained. The substrate is then reactively ion etched to the formulated depth, and any residual photoresist is stripped away leaving a two-level binary surface relief pattern 14 in the optical substrate 12. The two-level or binary surface relief pattern 14 in the optical substrate 12 forms the phase shift binary optical element 10.

The optical substrate 12 can also be formed of materials such as Ge, ZnSe, Si, GaAs, and $SiO_2$.

The most reliable and accurate way to etch the optical substrate is to use reactive ion etching. The process of reactive ion etching anisotropically etches material at very repeatable rates. The desired etch depth can be obtained very accurately. The anisotropic nature of the process assures a vertical etch, resulting in a true binary surface relief profile.

Alternatively, pattern generators, either optical or electron beam, can expose the thin layer of photoresist. As noted, the photoresist on the substrate can be exposed with an electron-beam pattern generator. The e-beam direct-write process eliminates masks and their corresponding alignment and exposure problems. The binary optical element can also be reproduced using epoxy casting, solgel casting, embossing, injection molding and holographic reproduction.

As shown in Figure 3, the binary optical element 38 can have a plurality of multilevel surface relief phase grating structures 40, 42, 44 and 46. The phase of the collimated beam (not shown) from the binary optical element 38 can be shifted for the entire spatial profile of the beam.

The first and second phase shift sections of the binary optical element are merely illustrative examples. A plurality of sections, each with different offsets can be fabricated to phase shift different portions of the collimated beam which passes through the binary optical element. The plurality of phase shift sections of a binary optical element need not be concentric, nor symmetric. The plurality of phase shift sections of a binary optical element can alter the phase of an incident light beam across the entire spatial profile of the light beam.

## Claims

1. A binary optical element for phase shifting adjacent wavefronts of an incident light beam comprising

    an optical substrate (12), and

at least a binary surface relief pattern upon said substrate wherein said binary surface relief pattern has a first section (16) and a second section (18) wherein said second section is spatially offset (14) perpendicularly by a depth ($d_{offset}$) from said first section such that a light beam (24) transmitted through said second section of said binary surface relief pattern from said incident light beam is shifted in phase from a light beam transmitted through said first section of said binary surface relief pattern from said incident light beam.

2. The binary optical element for phase shifting adjacent wavefronts of a light beam of claim 1 wherein the offset depth, d, between said second section of said binary surface relief pattern and said first section of said binary surface relief pattern is

$$d = \lambda / 2(n - 1)$$

where n is the index of refraction of said optical substrate and $\lambda$ is the wavelength of said incident light beam in air.

3. The binary optical element for phase shifting adjacent wavefronts of a light beam of claim 1 wherein the offset depth, d, between said second section of said binary surface relief pattern and said first section of said binary surface relief pattern is

$$d = \lambda / 4(n - 1)$$

where n is the index of refraction of said optical substrate and $\lambda$ is the wavelength of said incident light beam in air.

4. The binary optical element for phase shifting adjacent wavefronts of a light beam of claim 1 wherein the offset depth, d, between said second section of said binary surface relief pattern and said first section of said binary surface relief pattern is

$$d = m ( \lambda / 4(n - 1))$$

where m is the phase shift in terms of $\Pi$, n is the index of refraction of said optical substrate and $\lambda$ is the wavelength of said incident light beam in air.

**FIG. 1**

**FIG. 3**

Develop Photoresist

Etch

Remove Photoresist

## FIG. 2

**European Patent Office**

# EUROPEAN SEARCH REPORT

Application Number

EP 94 30 4830

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 476 931 (CANON K.K.) * page 5, line 39 - line 56; figures 3,4,5,7,19 * * page 8, line 16 - line 33 * | 1,2 | G02B27/00 G02B5/18 |
| A |  | 3,4 | |
| | --- | | |
| X | APPLIED OPTICS, vol.32, no.14, 10 May 1993, NEW YORK US pages 2538 - 2542 CORDINGLEY * page 2539, right column * | 1,2 | |
| | --- | | |
| A | US-A-4 933 649 (SWANSON ET AL.) * column 4, line 30 - column 5, line 32; figures 2,4,9 * | 1 | |
| | ----- | | |
| | | | TECHNICAL FIELDS SEARCHED (Int.Cl.6) |
| | | | G02B |

The present search report has been drawn up for all claims

| Place of search | Date of completion of the search | Examiner |
|---|---|---|
| BERLIN | 6 October 1994 | von Moers, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)